# EUROPEAN PATENT APPLICATION

(11) **EP 3 343 720 A1**
(43) Date of publication of application: **04.07.2018**
(21) Application number: 16841752.5
(22) Date of filing: 26.08.2016
(51) Int. Cl.: H02J 3/38, G06Q 50/06, H02J 3/14

(54) **MANAGEMENT SERVER, MANAGEMENT METHOD, AND MANAGEMENT SYSTEM**

(30) Priority: 28.08.2015 JP 2015168904; 28.08.2015 JP 2015168905
(71) Applicant: Kyocera Corporation, Kyoto-shi Kyoto 612-8501 (JP)
(72) Inventor: TERAI, Ryota, Kyoto-shi Kyoto 612-8501 (JP); AIKAWA, Shinji, Kyoto-shi Kyoto 612-8501 (JP); UTAMARU, Tsudoi, Kyoto-shi Kyoto 612-8501 (JP); YOSHITANI, Naohisa, Kyoto-shi Kyoto 612-8501 (JP)
(74) Representative: TBK
(86) International application number: PCT/JP2016/075081
(87) International publication number: WO 2017/038720

(57) **Abstract**

A management server comprises a transmitter configured to transmit a power instruction message; and a receiver configured to receive, from a facility, a response message or a report message with respect to an inquiry message. The transmitter is further configured to transmit the power instruction message based on the response message or the report message.

## Description

### TECHNICAL FIELD

The present invention relates to a management server configured to transmit a power instruction message, a management method, and a management system.

### BACKGROUND ART

There has been known a power instruction message including a forward power flow suppression message requesting a suppression of a forward power flow amount (power supply amount) from a power grid to a facility (for example, Demand Response (DR)) or a reverse power flow suppression message requesting a suppression of a reverse power flow amount from a facility to a power grid. The power instruction message is transmitted to a facility from a management server belonging to an electric power company, a power distribution company, or the like through a communication line.

Furthermore, there has been proposed a technique for performing a suppression of a forward power flow amount using a forward power flow suppression message according to a predetermined plan, priority, policy, or the like (for example, Patent Literatures 1 and 2).

### CITATION LIST

### PATENT LITERATURE

Patent Literature 1: JP 2014-60879 A
Patent Literature 2: JP 2014-150627 A

### SUMMARY OF INVENTION

A management server according to one embodiment comprises a transmitter configured to transmit a power instruction message; and a receiver configured to receive, from a facility, a response message or a report message with respect to an inquiry message. The transmitter is further configured to transmit the power instruction message based on the response message or the report message. The inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount. The report message comprises information indicating a control situation of the forward power flow amount or the reverse power flow amount during a control period of the forward power flow amount or the reverse power flow amount.

A management method according to one embodiment comprises a step A of transmitting a power instruction message; and a step B of receiving, from a facility, a response message or a report message with respect to an inquiry message. The step A comprises transmitting the power instruction message based on the response message or the report message. The inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount. The report message comprises information indicating a control situation of the forward power flow amount or the reverse power flow amount during a control period of the forward power flow amount or the reverse power flow amount.

A management system according to one embodiment comprises a transmitter configured to transmit a power instruction message; and a receiver configured to receive, from a facility, a response message or a report message with respect to an inquiry message. The transmitter is configured to transmit the power instruction message based on the response message or the report message. The inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount. The report message comprises information indicating a control situation of the forward power flow amount or the reverse power flow amount during a control period of the forward power flow amount or the reverse power flow amount.

### BRIEF DESCRIPTION OF DRAWINGS

Fig. 1 is a diagram illustrating a power management system 1 according to a first embodiment.
Fig. 2 is a diagram illustrating a lower management server 300 according to the first embodiment.
Fig. 3 is a diagram illustrating a suppression influence information according to the first embodiment.
Fig. 4 is a diagram illustrating a management method according to the first embodiment.
Fig. 5 is a diagram illustrating a management method according to Modification 1.

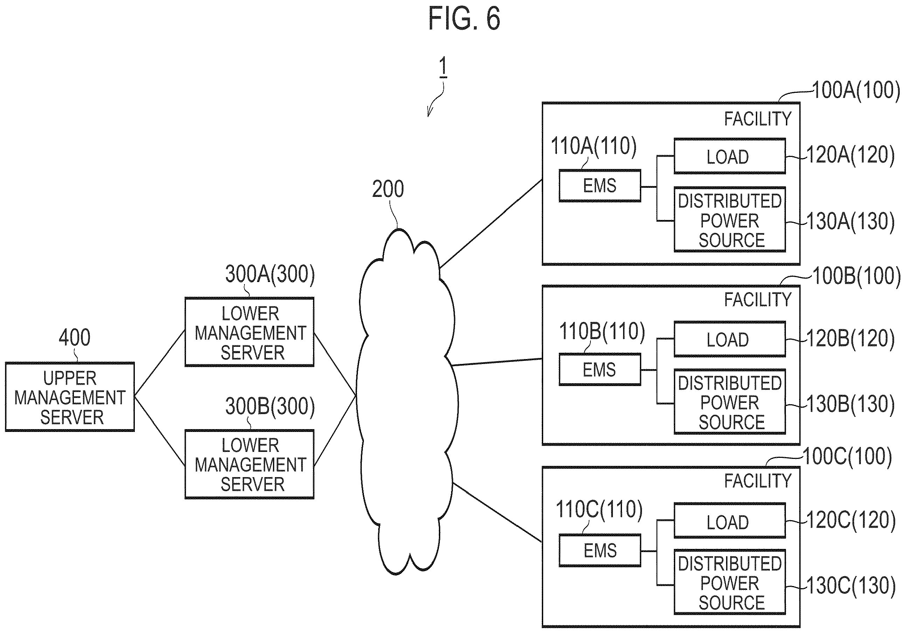

Fig. 6 is a diagram illustrating a power management system 1 according to a second embodiment.
Fig. 7 is a diagram illustrating a lower management server 300 according to the second embodiment.
Fig. 8 is a diagram illustrating a suppression influence information according to the second embodiment.
Fig. 9 is a diagram illustrating a management method according to the second embodiment.
Fig. 10 is a diagram illustrating a management method according to Modification 1.

### DESCRIPTION OF EMBODIMENTS

Hereinafter, a first embodiment will be described with reference to the drawings. In the following description of the drawings, the same or similar reference numerals are assigned to the same or similar parts.

However, it should be noted that the drawings are schematic and ratios of dimensions and the like may be different from actual ones. Therefore, concrete dimensions and the like should be determined with reference to the following explanation. In addition, it is a matter of course that the drawings also include parts having different dimensional relationships or ratios between the drawings.

### [Summary of Disclosure]

First, even if a suppression of a forward power flow amount or a reverse power flow amount using a power instruction message is performed according to predetermined static information (plan, priority, policy, or the like), each facility does not necessarily suppression a forward power flow amount or a reverse power flow amount actually according to the power instruction message. Therefore, there is a possibility that an appropriate suppression of the forward power flow amount or the reverse power flow amount by the power instruction message will not be realized.

A management server according to the summary of the disclosure includes: a transmitter configured to transmit, to a facility, an inquiry message including at least one of information inquiring as to whether a suppression of a forward power flow amount from a power grid to the facility or a reverse power flow amount from the facility to the power grid can be performed, and information indicating a suppression amount of the forward power flow amount or the reverse power flow amount; and a receiver configured to receive, from the facility, a response message with respect to the inquiry message, wherein the transmitter transmits, to the facility, a power instruction message including a forward power flow suppression message requesting a suppression of the forward power flow amount or a reverse power flow suppression message requesting a suppression of the reverse power flow amount.

In the summary of the disclosure, the management server transmits, to the facility, the power instruction message including the forward power flow suppression message requesting the suppression of the forward power flow amount or the reverse power flow suppression message requesting the suppression of the reverse power flow amount, based on the response message with respect to the inquiry message. According to such a configuration, whether the forward power flow amount or the reverse power flow amount is suppressed by the power instruction message can be guaranteed to some degrees by a prior inquiry. Therefore, the forward power flow amount or the reverse power flow amount can be appropriately suppressed by the power instruction message.

Second, even if the suppression of the forward power flow amount or the reverse power flow amount using the power instruction message is performed according to predetermined static information (plan, priority, policy, or the like), each facility does not necessarily suppression the forward power flow amount or the reverse power flow amount actually according to the power instruction message. Therefore, there is a possibility that an appropriate suppression of the forward power flow amount or the reverse power flow amount by the power instruction message will not be realized.

A management server according to the summary of the disclosure includes: a transmitter configured to transmit a first power instruction message to the facility as a power instruction message; and a receiver configured to receive, from the facility, a report message indicating a suppression situation of the forward power flow amount or the reverse power flow amount in a suppression period of the forward power flow amount or the reverse power flow amount, wherein the transmitter transmits a second power instruction message to the facility as the power instruction message during the suppression period, based on the report message.

In the summary of the disclosure, the management server transmits a second power instruction message to the facility as the power instruction message during the suppression period, based on the report message indicating the suppression situation of the forward power flow amount or the reverse power flow amount. According to such a configuration, even after the start of the suppression period, it is possible to correct the excess or deficiency of the suppression amount in the suppression control performed by the transmission of the first power instruction message by the transmission of the second power instruction message. Therefore, the forward power flow amount or the reverse power flow amount can be appropriately suppressed by the power instruction message.

### [First Embodiment]

### (Power Management System)

Hereinafter, a power management system according to a first embodiment will be described.

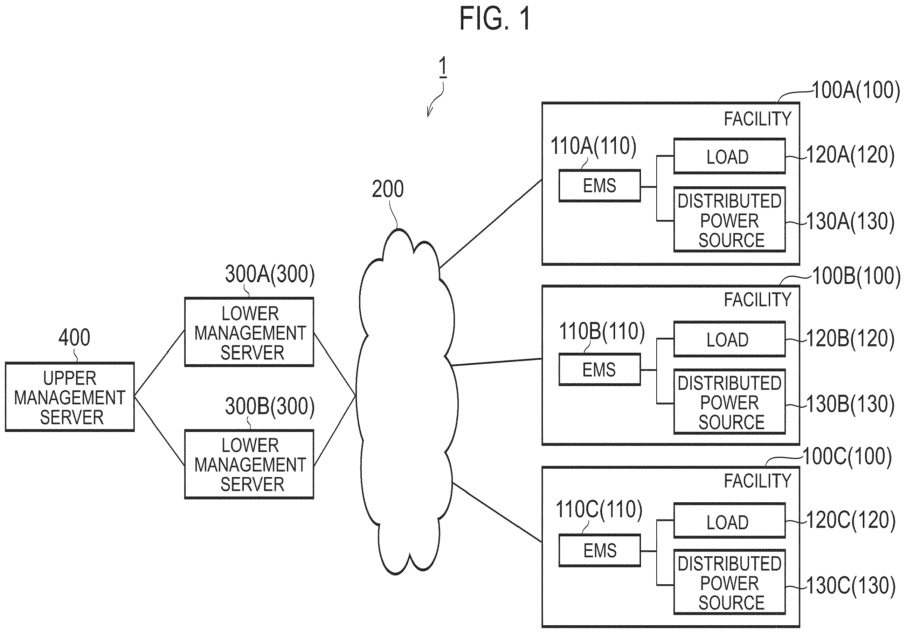

As illustrated in Fig. 1, the power management system 1 includes a facility 100, a network 200, a lower management server 300, and an upper management server 400.

The facility 100 includes an EMS 110, a load 120, and a distributed power source 130. The EMS 110 is an apparatus (energy management system) configured to manage power of an equipment provided in the facility 100. The load 120 is an equipment configured to consume power. The load 120 includes an equipment, for example, a refrigerator, an illumination, an air conditioner, a television, and the like. The load 120 may include one equipment, or may include a plurality of equipments. The distributed power source 130 is an equipment configured to generate power and accumulate the power. The distributed power source 130 includes an equipment, for example, a solar cell, a fuel cell, a storage battery, and the like. The distributed power source 130 may include one equipment, or may include a plurality of equipments.

In the first embodiment, a facility 100A, a facility 100B, and a facility 100C are illustrated as examples of the facility 100. The facility 100A, the facility 100B, and the facility 100C have similar configurations.

The network 200 is a communication line for connecting the facility 100 and the lower management server 300. The network 200 is, for example, the Internet. The network 200 is provided by a provider that each facility 100 has a contract with.

The lower management server 300 is a server belonging to an aggregator such as a power distribution company. The aggregator is a company which manages a forward power flow amount or a reverse power flow amount of the facility 100 that has a contract with the aggregator.

In the first embodiment, a lower management server 300A and a lower management server 300B are illustrated as examples of the lower management server 300. The lower management server 300A and the lower management server 300B have similar configurations. The upper management server 400 may be integrated with the lower management server 300.

The upper management server 400 is a server belonging to an electric power company such as a power company. The electric power company may entrust management for the forward power flow amount or the reverse power flow amount of the facility 100 to the aggregator.

In the first embodiment, the upper management server 400 transmits a forward power flow suppression message (for example, Demand Response (DR)) requesting a suppression of a forward power flow amount (a supply amount of power) from the power grid to the facility 100. The upper management server 400 transmits a reverse power flow suppression message requesting a suppression of a reverse power flow amount from the facility 100 to the power grid. In the first embodiment, the forward power flow suppression message and the reverse power flow suppression message are collectively referred to as a power instruction message.

Here, the forward power flow suppression message includes information indicating a suppression degree of a power amount (forward power flow amount) supplied from the power grid to the facility 100. The suppression degree may be represented by an absolute value of the power amount (for example, ○○ kW). Alternatively, the suppression degree may be represented by a relative value of the power amount (for example, decrease by ○○ kW). Alternatively, the suppression degree may be represented by a suppression ratio of the power amount (for example, ○○ %). Alternatively, the suppression degree may be represented by a predetermined step (for example, 0, 1,2, and 3).

Alternatively, the forward power flow suppression message may include information indicating a power purchase price that is a consideration for the forward power flow from the power grid. By setting a high price as the power purchase price, the power amount supplied from the power grid to the facility 100 is expected to be suppressed.

Here, the reverse power flow suppression message includes information indicating a suppression degree of a power amount (reverse power flow amount) supplied from the facility 100 to the power grid. Specifically, the reverse power flow suppression message includes information indicating the suppression degree of the output of the distributed power source. The suppression degree may be represented by an absolute value of the output of the distributed power source (for example, ○○ kW). Alternatively, the suppression degree may be represented by a relative value of the output of the distributed power source (for example, decrease by ○○ kW). Alternatively, the suppression degree may be represented by a predetermined step (for example, 0, 1, 2, and 3). Alternatively, the suppression degree may be represented by a suppression ratio of the output of the distributed power source (for example, ○○ %). When the distributed power source is installed in the facility 100, the suppression ratio may be a ratio to an output (hereinafter, equipment certified output) certified as an output capability of a PCS that controls the distributed power source. If the output capability of the distributed power source is different from the output capability of the PCS, the equipment certified output is the smaller one of these output capabilities. In a case where a plurality of PCSs are installed, the equipment certified output is the sum of the output capabilities of the plurality of PCSs.

Here, a format that complies with an automated demand response (ADR) may be used as formats of the forward power flow suppression message and the reverse power flow suppression message. The communication between the upper management server 400 and the lower management server 300 and the communication between the lower management server 300 and the facility 100 may be performed according to a method that complies with the Open ADR standard (for example, Open ADR 2.0 or the like).

### (Management Server)

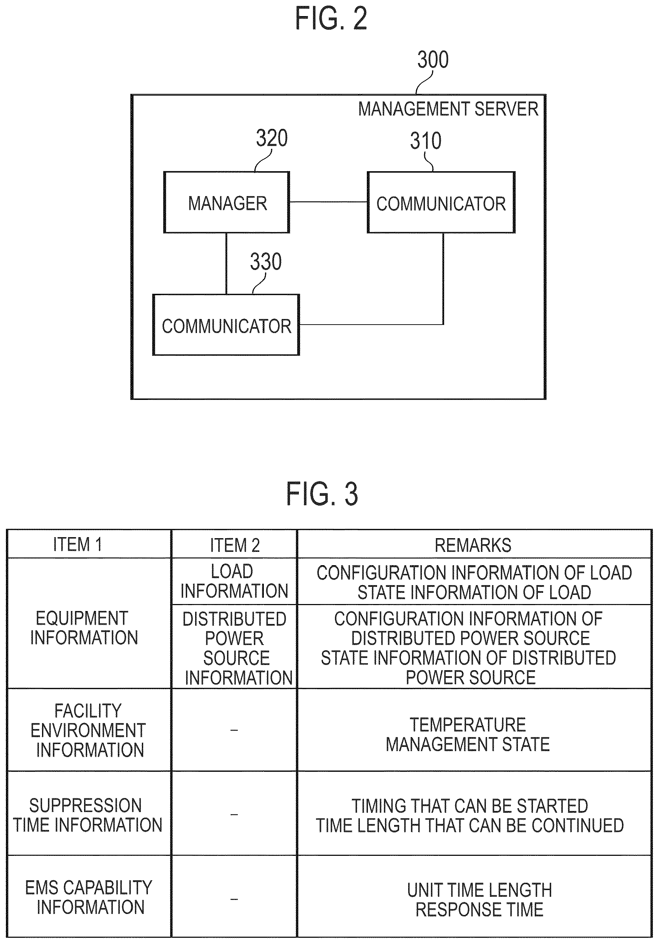

Hereinafter, a management server according to a first embodiment will be described. Here, the lower management server 300 is exemplified as the management server. However, the management server may be the upper management server 400. As illustrated in Fig. 2, the lower management server 300 includes a communicator 310, a manager 320, and a controller 330.

The communicator 310 is configured by a communication module or the like, and performs communication with the facility 100 and the upper management server 400. For example, the communicator 310 receives, from the upper management server 400, a power instruction message including the forward power flow suppression message or the reverse power flow suppression message. The communicator 310 transmits, to the facility 100, a power instruction message including the forward power flow suppression message or the reverse power flow suppression message through the network 200 (communication line). Since the management of the forward power flow amount or the reverse power flow amount of the facility 100 is entrusted to the aggregator (lower management server 300), the contents of the power instruction message transmitted to the facility 100 may be different from the contents of the power instruction message received from the upper management server 400.

In the first embodiment, the communicator 310 transmits, to the facility 100, the inquiry message including at least one of information inquiring whether the suppression of the forward power flow amount or the reverse power flow amount can be performed, and information indicating the suppression amount of the forward power flow amount or the reverse power flow amount. The communicator 310 receives, from the facility 100, a response message with respect to the inquiry message.

Here, the response message includes information indicating whether the suppression of the forward power flow amount or the reverse power flow amount can be performed. Furthermore, if the inquiry message includes information indicating the suppression amount of the forward power flow amount or the reverse power flow amount, the response message may include information indicating whether the suppression of the forward power flow amount or the reverse power flow amount can be performed according to the suppression amount indicated by the inquiry message.

In the first embodiment, as will be described later, a supply and demand adjustment plan is determined based on the response message. The supply and demand adjustment plan is a plan of the transmission partner (facility 100) of the power instruction message and the contents of the power instruction message (the suppression amount of the forward power flow or the suppression amount of the reverse power flow). Accordingly, the communicator 310 transmits the power instruction message to the facility 100 based on the response message.

The manager 320 is configured by a storage such as a hard disk drive, and manages suppression influence information that influences the suppression of the forward power flow amount or the reverse power flow amount. For example, the manager 320 may manage the suppression influence information corresponding to at least one item of the items illustrated in Fig. 3.

As illustrated in Fig. 3, the suppression influence information manages the suppression influence information corresponding to at least one of items such as equipment information, facility environment information, suppression time information, and EMS capability information.

The "equipment information" is information about an equipment included in the facility 100. For example, the equipment information includes at least one of configuration information indicating the configuration of the equipment and state information indicating the operating state of the equipment. Specifically, the "equipment information" includes at least one of load information about the load included in the facility 100 and distributed power source information about the distributed power source included in the facility 100.

The load information includes information indicating the type of the load as the configuration information, and/or includes information indicating one of the power consumption of the load and the operating state of the load as the state information. If the load information includes information indicating the type of the load, it is possible to predict whether the facility 100 has a load having room to suppression the forward power flow amount or the reverse power flow amount. For example, a refrigerator has no room to suppression the forward power flow amount or the reverse power flow amount, and an air conditioner has room to suppression the forward power flow amount or the reverse power flow amount. Even if the load information includes information indicating one of the power consumption of the load and the operating state of the load, it is possible to predict whether the increase and decrease of the power consumption of the load included in the facility 100 can be adjusted. For example, if the power consumption of the air conditioner is high or the set temperature of the air conditioner is low, it is possible to predict that the forward power flow amount can be reduced by the decrease of the power consumption, or it is possible to predict that it is difficult to decrease the reverse power flow amount by the increase of the power consumption. On the other hand, if the power consumption of the air conditioner is low or the set temperature of the air conditioner is high, it is possible to predict that it is difficult to reduce the forward power flow amount by the decrease of the power consumption, or it is possible to predict that the reverse power flow amount can be increased by the increase of the power consumption.

The distributed power source information includes information indicating the type of the distributed power source as the configuration information, and/or includes information indicating the available output amount of the distributed power source as the state information. If the distributed power source information includes information indicating the type of the distributed power source, it is possible to predict whether the forward power flow amount or the reverse power flow amount can be suppressed by adjusting the output of the distributed power source. For example, if the facility 100 includes a power generation apparatus such as a solar cell or a fuel cell, it is possible to predict that the forward power flow amount or the reverse power flow amount can be suppressed by adjusting the output of the power generation apparatus. Similarly, if the facility 100 includes a storage battery, it is possible to predict that the forward power flow amount or the reverse power flow amount can be suppressed by adjusting the charging and discharging of the storage battery. If the distributed power source information includes information indicating the available output amount, it is possible to predict an amount that can suppression the forward power flow amount or the reverse power flow amount. The available output amount may be a maximum output amount of the power generation apparatus such as the solar cell or the fuel cell, may be a current output amount, or may be a difference between the current output amount and the maximum output amount. The available output amount may be a maximum storage capacity of the storage battery, may be a current charge amount, or may be a difference between the current charge amount and the maximum charge amount.

The "facility environment information" is information indicating the environment of the facility 100. Specifically, the facility environment information includes information indicating at least one of a temperature of the facility 100 and a management state of the facility 100. The temperature of the facility 100 may be an outside air temperature of the facility 100 or an inside temperature of the facility 100. In addition, the facility environment information may include a humidity inside the facility 100 or a humidity outside the facility 100. According to such information, for example, while maintaining the comfort of the user of the facility 100, it is possible to predict whether the forward power flow amount or the reverse power flow amount can be suppressed by adjusting the set temperature of the air conditioner. The management state of the facility 100 includes information such as whether energy saving management is permitted as the facility or whether energy saving management is performed as the facility. For example, in a case where the energy saving management is permitted, if the energy saving management is not performed, it is possible to predict whether the forward power flow amount can be suppressed by performing the energy saving management. Alternatively, if the energy saving management is performed, it is possible to predict whether the reverse power flow amount can be suppressed by releasing the energy saving management. Here, the energy saving management is a management that reduces the power consumption of the load by adjusting the temperature of the air conditioner and adjusting the brightness of the illumination. The contents of the energy saving management may be preset in the facility 100, or may be instructed from the lower management server 300.

"suppression time information" includes information indicating at least one of a timing at which the suppression of the forward power flow amount or the reverse power flow amount is capable of being started in the facility 100, a length of time during which the suppression of the forward power flow amount or the reverse power flow amount is capable of being continued in the facility 100, and a time period in which the forward power flow amount or the reverse power flow amount is capable of being suppressed in the facility 100. According to the above information, it is possible to predict a time period in which the forward power flow amount or the reverse power flow amount is capable of being suppressed.

"EMS capability information" is information related to the capability of the EMS 110 that controls the equipment included in the facility 100. The EMS capability information includes information indicating at least one of a length of unit time for which the EMS 110 is capable of controlling the equipment, a response time from reception of the power instruction message to a timing at which the suppression of the forward power flow amount or the reverse power flow amount is capable of being started, and the number of the suppression instructions that the EMS 110 handles (handling number), the suppression instruction is being for the forward power flow amount or the reverse power flow amount. When the EMS capability information includes the length of unit time, it is possible to figure out the length of unit time during which the forward power flow amount or the reverse power flow amount is capable of being suppressed and determine the above-described supply and demand adjustment plan for each time period. When the EMS capability information includes the response time, it is possible to quickly suppression the forward power flow amount or the reverse power flow amount by instructing the suppression for the forward power flow amount or the reverse power flow amount in turn from the facility 100 having the EMS 110 of which the response time is short. When the EMS capability information includes the handling number, it is possible to perform control such that unevenness does not occur in the sum of adjustment amounts for the facility 100 for each period of time and perform control such that the adjustment amount in the aggregator is identical to an instruction from the upper management server, by modifying the number of the instructions for suppression of the forward power flow amount or the reverse power flow amount which are transmitted to the EMS 110, to the handling number, for each EMS 110, e.g., by transmitting a plurality of instructions to the EMS 110 that handles a complicated instruction in which control-per-every-30-minutes is available by automatic control.

The controller 330 is configured by a CPU, a memory, and the like, and controls the communicator 310 and the manager 320.

For example, the controller 330 determines the supply and demand adjustment plan based on the response message received from the facility 100. As described above, the supply and demand adjustment plan is a plan of the transmission partner (facility 100) of the power instruction message and the contents of the power instruction message (the suppression amount of the forward power flow or the suppression amount of the reverse power flow). The supply and demand adjustment plan may be determined for each unit time length (for example, 30 minutes) in a period in which the suppression of the forward power flow amount or the reverse power flow amount is instructed by the power instruction message received from the upper management server 400.

Here, the above-mentioned inquiry message may include information inquiring whether the suppression of the forward power flow amount or the reverse power flow amount can be performed. The response message includes information indicating whether the suppression of the forward power flow amount or the reverse power flow amount can be performed. Furthermore, if the inquiry message includes information indicating the suppression amount of the forward power flow amount or the reverse power flow amount, the response message may include information indicating whether the suppression of the forward power flow amount or the reverse power flow amount can be performed according to the suppression amount indicated by the inquiry message.

In such a case, the controller 330 selects, as the transmission partner of the power instruction message, the facility 100 that has returned the response message including information indicating that the suppression of the forward power flow amount or the reverse power flow amount can be performed. Therefore, the above-described communicator 310 transmits the power instruction message to the facility 100 that has returned the response message including information indicating that the suppression of the forward power flow amount or the reverse power flow amount can be performed.

In the first embodiment, the response message received from the facility 100 may include suppression influence information corresponding to at least one item of the items illustrated in Fig. 3. That is, the response message may include the suppression influence information corresponding to at least one of items such as equipment information, facility environment information, suppression time information, and EMS capability information. The response message may include suppression influence information of items other than the items managed by the manager 320.

The controller 330 may selects the facility 100 capable of suppressing the forward power flow amount or the reverse power flow amount based on one of the suppression effect information included in the response message and the suppression influence information managed by the manager 320, and thus may predict an amount that can suppression the forward power flow amount or the reverse power flow amount for each selected facility 100.

The controller 330 determines an incentive for the actual result of suppressing the forward power flow amount or the reverse power flow amount with respect to the power instruction message. The incentive may be money compensation, may be a remuneration by an intangible item such as a monetary receivable, a gift certificate, or a coupon, or may be a remuneration by a tangible object such as a prize.

### (Management Method)

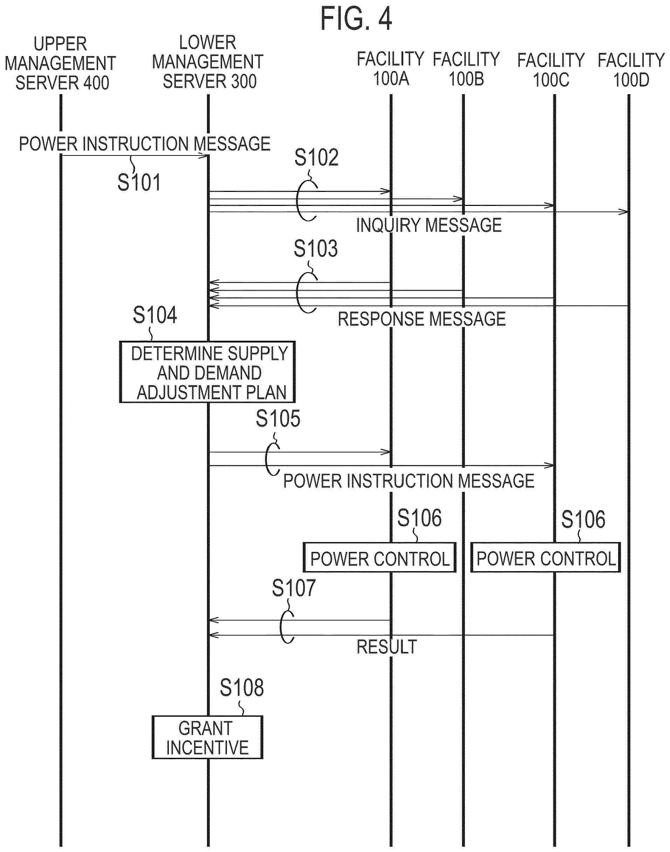

Hereinafter, a management method according to a first embodiment will be described. In Fig. 4, facilities 100A to 100D are illustrated as examples of the facility 100.

As illustrated in Fig. 4, in step S101, the lower management server 300 receives a power instruction message from the upper management server 400.

In step S102, the lower management server 300 transmits an inquiry message to each facility 100. The inquiry message includes at least one of information inquiring whether the suppression of the forward power flow amount or the reverse power flow amount can be performed, and information indicating the suppression amount of the forward power flow amount or the reverse power flow amount.

In step S103, the lower management server 300 receives a response message with respect to the inquiry message. The response message includes information indicating whether the suppression of the forward power flow amount or the reverse power flow amount can be performed. Furthermore, if the inquiry message includes information indicating the suppression amount of the forward power flow amount or the reverse power flow amount, the response message may include information indicating whether the suppression of the forward power flow amount or the reverse power flow amount can be performed according to the suppression amount indicated by the inquiry message. Here, a case is exemplified which returns the response message including information indicating that the facilities 100A and 100C can perform the suppression of the forward power flow amount or the reverse power flow amount.

In the first embodiment, as described above, the response message may include suppression influence information corresponding to at least one item of the items illustrated in Fig. 3.

In step S104, the lower management server 300 determines the supply and demand adjustment plan based on the response message. As described above, the supply and demand adjustment plan is a plan of the transmission partner (facility 100) of the power instruction message and the contents of the power instruction message (the suppression amount of the forward power flow or the suppression amount of the reverse power flow). Here, the lower management server 300 selects, as the transmission partner of the power instruction message, the facilities 100A and 100C that has returned the response message including information indicating that the suppression of the forward power flow amount or the reverse power flow amount can be performed.

In the first embodiment, the lower management server 300 may determine the supply and demand adjustment plan based on one of the suppression influence information included in the response message and the suppression influence information managed by the manager 320.

In step S105, the lower management server 300 transmits the power instruction message to the facilities 100A and 100C according to the result of step S105.

In step S106, the facilities 100A and 100C control the forward power flow amount or the reverse power flow amount according to the power instruction message.

In step S107, the facilities 100A and 100C transmit the result of step S106 (performance of power control) to the lower management server 300.

In step S108, the lower management server 300 determines an incentive for the actual result of suppressing the forward power flow amount or the reverse power flow amount with respect to the power instruction message, based on the actual result received in step S107.

### (Operation and Effect)

In the first embodiment, the lower management server 300 transmits, to the facility 100, the power instruction message including the forward power flow suppression message requesting the suppression of the forward power flow amount or the reverse power flow suppression message requesting the suppression of the reverse power flow amount, based on the response message with respect to the inquiry message. According to such a configuration, whether the forward power flow amount or the reverse power flow amount is suppressed by the power instruction message can be guaranteed to some degrees by a prior inquiry. Therefore, the forward power flow amount or the reverse power flow amount can be appropriately suppressed by the power instruction message.

In the first embodiment, the lower management server 300 belongs to the aggregator entrusted from the electric power company with the management of the forward power flow amount or the reverse power flow amount of the facility 100, but according to the above-described configuration, the aggregator can respond to the entrustment of the electric power company.

### [Modification 1]

Hereinafter, Modification 1 of the first embodiment will be described. Differences from the first embodiment will be mainly described below.

In Modification 1, the inquiry message includes information indicating a first suppression amount as a suppression amount of a forward power flow amount or a reverse power flow amount. The lower management server 300 (communicator 310) transmits the inquiry message or the power instruction message, which includes information indicating a second suppression amount smaller than the first suppression amount as the suppression amount of the forward power flow amount or the reverse power flow amount, to the facility 100 that has returned the response message including information indicating that the suppression of the first suppression amount cannot be performed.

### (Management Method)

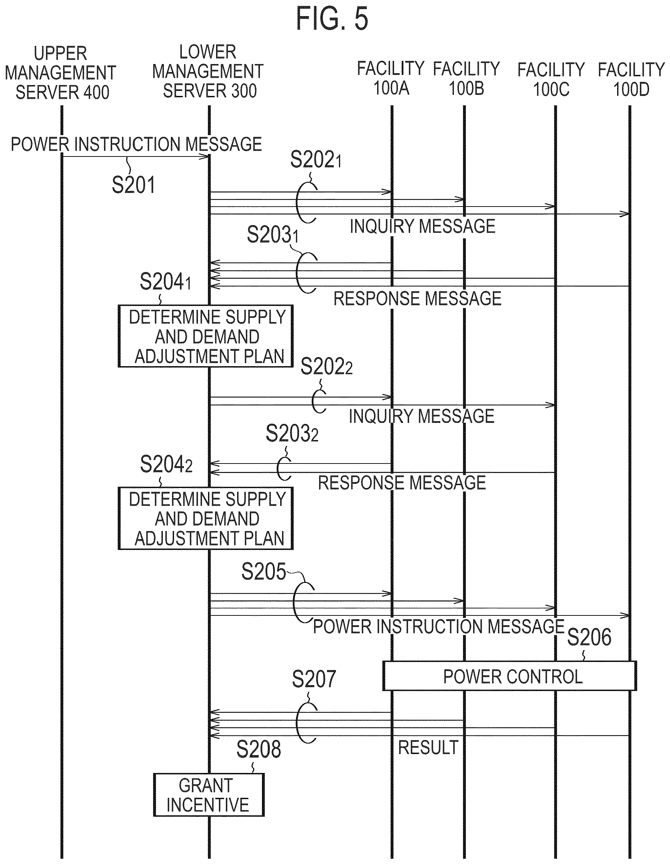

Hereinafter, a management method according to Modification 1 will be described. In Fig. 5, facilities 100A to 100D are illustrated as examples of the facility 100.

As illustrated in Fig. 5, in step S201, the lower management server 300 receives a power instruction message from the upper management server 400.

In step S202₁, the lower management server 300 transmits an inquiry message to each facility 100. The inquiry message includes at least one of information inquiring whether the suppression of the forward power flow amount or the reverse power flow amount can be performed, and information indicating the suppression amount (first suppression amount) of the forward power flow amount or the reverse power flow amount.

In step S203₁, the lower management server 300 receives a response message with respect to the inquiry message. The response message may include information indicating whether the suppression of the forward power flow amount or the reverse power flow amount can be performed according to the first suppression amount indicated by the inquiry message. Here, a case is exemplified which returns a response message including information indicating that the facilities 100A and 100C can perform the suppression of the first suppression amount and returns a response message including information indicating that the facilities 100B and 100D cannot perform the suppression of the first suppression amount.

In step S204₁, the lower management server 300 determines a supply and demand adjustment plan based on the response message. As described above, the supply and demand adjustment plan is a plan of the transmission partner (facility 100) of the power instruction message and the contents of the power instruction message (the suppression amount of the forward power flow or the suppression amount of the reverse power flow). Here, the lower management server 300 selects, as the transmission partner of the power instruction message, the facilities 100A and 100C that has returned the response message including information indicating that the suppression of the forward power flow amount or the reverse power flow amount can be performed.

In step S202₂, the lower management server 300 retransmits the inquiry message, which includes information indicating the second suppression amount smaller than the first suppression amount as the suppression amount of the forward power flow amount or the reverse power flow amount, to the facilities 100B and 100D that has returned the response message including information indicating that the suppression of the first suppression amount cannot be performed.

In step S203₂, the lower management server 300 receives a response message with respect to the inquiry message. Here, a case is exemplified which returns the response message including information indicating that the facilities 100B and 100D can perform the suppression of the second suppression amount.

In step S204₂, the lower management server 300 determines a supply and demand adjustment plan based on the response message. As described above, the supply and demand adjustment plan is a plan of the transmission partner (facility 100) of the power instruction message and the contents of the power instruction message (the suppression amount of the forward power flow or the suppression amount of the reverse power flow). Here, the lower management server 300 selects, as the transmission partner of the power instruction message, the facilities 100A and 100C that has returned the response message including information indicating that the suppression of the forward power flow amount or the reverse power flow amount can be performed.

In step S205, the lower management server 300 transmits the power instruction message to the facilities 100A to 100D according to the result of step S204₂.

In step S206, the facilities 100A to 100D control the forward power flow amount or the reverse power flow amount according to the power instruction message.

In step S207, the facilities 100A to 100D transmit the result of step S206 (performance of power control) to the lower management server 300.

In step S208, the lower management server 300 determines an incentive for the actual result of suppressing the forward power flow amount or the reverse power flow amount with respect to the power instruction message, based on the actual result received in step S207.

Here, as in the first embodiment, the response message may include suppression influence information corresponding to at least one item of the items illustrated in Fig. 3. In step S204i and step S204₂, the lower management server 300 may determine the supply and demand adjustment plan based on one of the suppression influence information included in the response message and the suppression influence information managed by the manager 320.

In Modification 1, in step S202₂, the lower management server 300 retransmits the inquiry message including information indicating the second suppression amount smaller than the first suppression amount as the suppression amount of the forward power flow amount or the reverse power flow amount. However, Modification 1 is not limited thereto. The lower management server 300 may omit the processes of step S202₂ and step S203₂. In such as case, in step S205, the lower management server 300 may transmit, to the facilities 100A and 100C, a power instruction message including the first suppression amount as the suppression amount of the forward power flow amount or the reverse power flow amount, and may transmit, to the facilities 100B and 100D, a power instruction message including the second suppression amount as the suppression amount of the forward power flow amount or the reverse power flow amount.

In Modification 1, the response message including information indicating that the facilities 100B and 100D can perform the suppression of the second suppression amount is returned. However, Modification 1 is not limited thereto. For example, if the response message including information indicating that the facilities 100B and 100D cannot perform the suppression of the second suppression amount is returned, the lower management server 300 may retransmit, to the facilities 100B and 100D, an inquiry message including information indicating a third suppression amount smaller than the second suppression amount as the suppression amount of the forward power flow amount or the reverse power flow amount, and may transmit, to the facilities 100B and 100D, a power instruction message including the third suppression amount smaller than the second suppression amount as the suppression amount of the forward power flow amount or the reverse power flow amount.

In Modification 1, the message including information indicating that the facilities 100A and 100C can perform the suppression of the first suppression amount is returned. However, Modification 1 is not limited thereto. For example, if the inquiry message including information indicating the second suppression amount is retransmitted to the facilities 100B and 100D, the lower management server 300 may retransmit, to the facilities 100A and 100C, an inquiry message including information indicating a fourth suppression amount larger than the first suppression amount as the suppression amount of the forward power flow amount or the reverse power flow amount, and may transmit, to the facilities 100A and 100C, a power instruction message including information indicating the fourth suppression amount larger than the first suppression amount as the suppression amount of the forward power flow amount or the reverse power flow amount.

### [Second Embodiment]

### (Power Management System)

Hereinafter, a power management system according to a second embodiment will be described. Since the power management system according to the second embodiment is the same as that of the first embodiment, a description thereof will be omitted.

### (Management Server)

Hereinafter, a management server according to a second embodiment will be described. Here, the lower management server 300 is exemplified as the management server. However, the management server may be the upper management server 400. Since the management server according to the second embodiment is the same as that of the first embodiment, a redundant description thereof will be omitted.

In the second embodiment, the communicator 310 transmits a first power instruction message to the facility 100 as the power instruction message before the start of the suppression period of the forward power flow amount or the reverse power flow amount. The communicator 310 receives, from the facility 100, a report message indicating a suppression situation of the forward power flow amount or the reverse power flow amount during the suppression period of the forward power flow amount or the reverse power flow amount.

Here, the report message may include an actual result value of the suppression amount of the forward power flow amount or the reverse power flow amount. Alternatively, if the first power instruction message includes a suppression request amount of the forward power flow amount or the reverse power flow amount, the report message may include information indicating whether the actual result value of the suppression amount of the forward power flow amount or the reverse power flow amount corresponds to the suppression request amount.

In the second embodiment, as will be described later, the supply and demand adjustment plan during the suppression period is reviewed based on the report message. The supply and demand adjustment plan is a plan of the transmission partner (facility 100) of the power instruction message and the contents of the power instruction message (the suppression amount of the forward power flow or the suppression amount of the reverse power flow). Accordingly, the communicator 310 transmits the second power instruction message to the facility 100 based on the report message.

As a first step, the controller 330 determines the supply and demand adjustment plan before the suppression period based on the suppression influence information managed by the manager 320, and instructs the communicator 310 to transmit the first power instruction message. As a second step, the controller 330 reviews the supply and demand adjustment plan during the suppression period based on the report message received from the facility 100, and instructs the communicator 310 to transmit the second power instruction message. In the specification, it should be noted that the power instruction message transmitted before the suppression period is referred to as the first power instruction message, and the power instruction message transmitted during the suppression period is referred to as the second power instruction message. As described above, the supply and demand adjustment plan is a plan of the transmission partner (facility 100) of the power instruction message and the contents of the power instruction message (the suppression amount of the forward power flow or the suppression amount of the reverse power flow). The supply and demand adjustment plan may be determined for each unit time length (for example, 30 minutes) in a period in which the suppression of the forward power flow amount or the reverse power flow amount is instructed by the power instruction message received from the upper management server 400.

Here, the report message may include an actual result value of the suppression amount of the forward power flow amount or the reverse power flow amount. Alternatively, if the first power instruction message includes a suppression request amount of the forward power flow amount or the reverse power flow amount, the report message may include information indicating whether the actual result value of the suppression amount of the forward power flow amount or the reverse power flow amount corresponds to the suppression request amount. By including these information in the report message, it is possible to correct the excess or deficiency of the suppression amount in the suppression control performed by the transmission of the first power instruction message by the transmission of the second power instruction message.

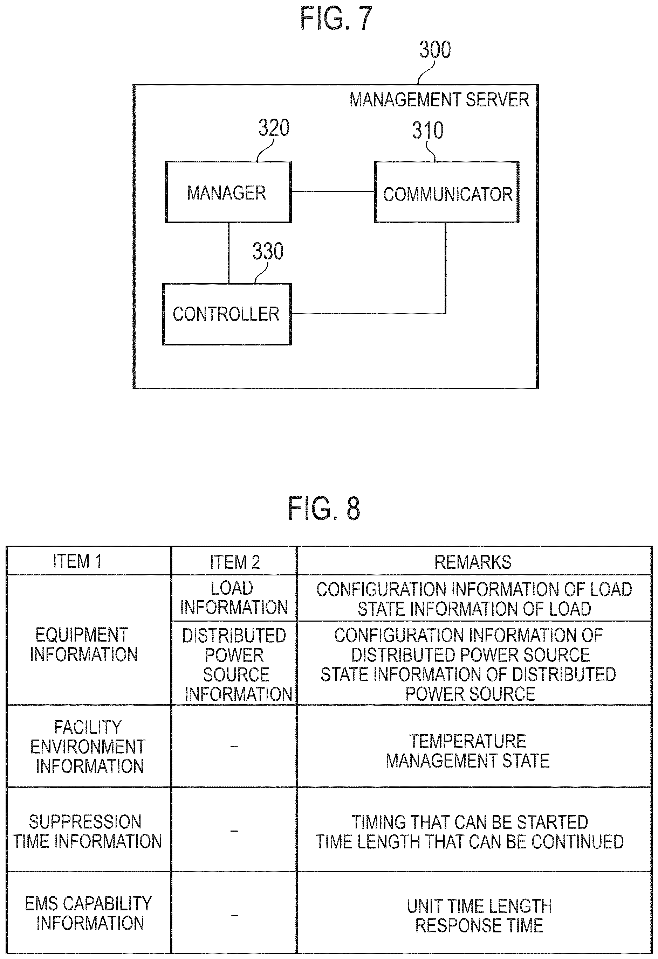

In the second embodiment, the report message received from the facility 100 may include suppression influence information corresponding to at least one item of the items illustrated in Fig. 8. That is, the report message may include the suppression influence information corresponding to at least one of items such as equipment information, facility environment information, suppression time information, and EMS capability information. It is preferable that the report message includes suppression influence information of items other than the items managed by the manager 320.

The controller 330 may review the supply and demand adjustment plan during the suppression period based on one of the suppression influence information included in the report message and the suppression influence information managed by the manager 320.

The controller 330 determines an incentive for the actual result of suppressing the forward power flow amount or the reverse power flow amount with respect to the power instruction message. The incentive may be money compensation, may be a remuneration by an intangible item such as a monetary receivable, a gift certificate, or a coupon, or may be a remuneration by a tangible object such as a prize.

### (Management Method)

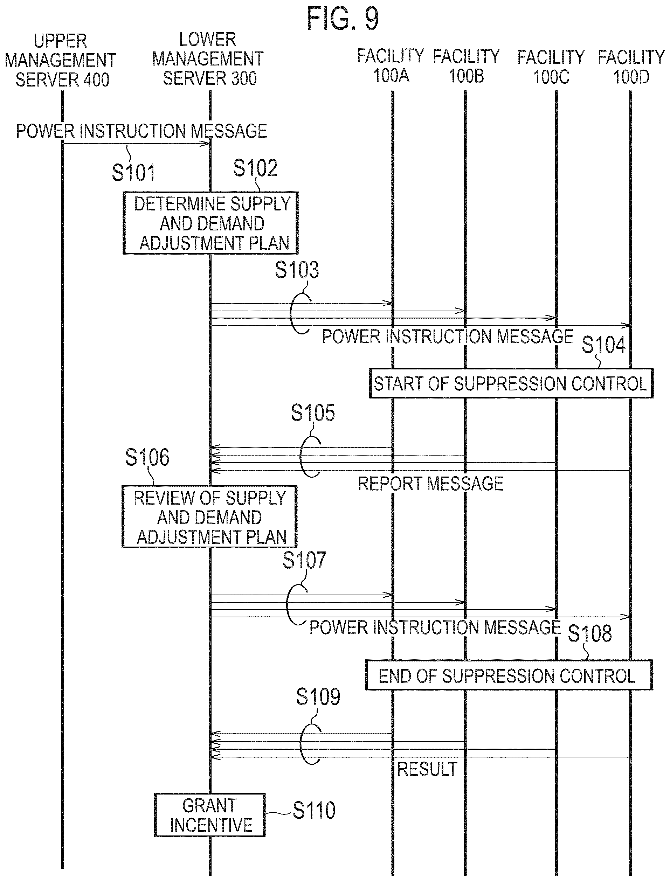

Hereinafter, a management method according to a second embodiment will be described. Fig. 9 is a diagram illustrating a management method according to the second embodiment. In Fig. 9, facilities 100A to 100D are illustrated as examples of the facility 100.

As illustrated in Fig. 9, in step S101, the lower management server 300 receives a power instruction message from the upper management server 400.

In step S102, the lower management server 300 determines a supply and demand adjustment plan before a suppression period based on suppression influence information managed by the manager 320. As described above, the supply and demand adjustment plan is a plan of the transmission partner (facility 100) of the power instruction message and the contents of the power instruction message (the suppression amount of the forward power flow or the suppression amount of the reverse power flow).

In step S103, the lower management server 300 transmits the first power instruction message to the facilities 100A to 100D as the power instruction message according to the result of step S102.

In step S104, the facilities 100A to 100D start the suppression control of the forward power flow amount or the reverse power flow amount according to the first power instruction message.

In step S105, the lower management server 300 receives, from the facilities 100A to 100D, the report message indicating the suppression situation of the forward power flow amount or the reverse power flow amount. The report message may include an actual result value of the suppression amount of the forward power flow amount or the reverse power flow amount. Alternatively, if the first power instruction message includes a suppression request amount of the forward power flow amount or the reverse power flow amount, the report message may include information indicating whether the actual result value of the suppression amount of the forward power flow amount or the reverse power flow amount corresponds to the suppression request amount.

In the second embodiment, as described above, the report message may include suppression influence information corresponding to at least one item of the items illustrated in Fig. 8.

In step S106, the lower management server 300 reviews the supply and demand adjustment plan during the suppression period based on the report message.

In step S107, the lower management server 300 transmits the second power instruction message to the facilities 100A to 100D as the power instruction message according to the result of step S106. The facilities 100A to 100D correct the suppression control of the forward power flow amount or the reverse power flow amount according to the first power instruction message. In step S107, the second power instruction message may be transmitted to the entire facilities 100, and in step S106, the second power instruction message may be transmitted only to the facility 100 considered to have a further suppression effect based on the reviewed supply and demand adjustment plan. In addition, the second power instruction message may be transmitted to the facility 100 that has not transmitted the first power instruction message in step S103.

In step S108, the facilities 100A to 100D end the suppression control of the forward power flow amount or the reverse power flow amount according to the expiration of the suppression period.

In step S109, the facilities 100A to 100D transmit, to the lower management server 300, the result of the suppression control (performance of power control) during the suppression period.

In step S110, the lower management server 300 determines an incentive for the actual result of suppressing the forward power flow amount or the reverse power flow amount with respect to the power instruction message, based on the actual result received in step S109.

### (Operation and Effect)

The lower management server 300 according to the second embodiment transmits the second power instruction message to the facility 100 as the power instruction message during the suppression period, based on the report message indicating the suppression situation of the forward power flow amount or the reverse power flow amount. According to such a configuration, even after the start of the suppression period, it is possible to correct the excess or deficiency of the suppression amount in the suppression control performed by the transmission of the first power instruction message by the transmission of the second power instruction message. Therefore, the forward power flow amount or the reverse power flow amount can be appropriately suppressed by the power instruction message.

In the second embodiment, the lower management server 300 belongs to the aggregator entrusted from the electric power company with the management of the forward power flow amount or the reverse power flow amount of the facility 100, but according to the above-described configuration, the aggregator can respond to the entrustment of the electric power company.

### [Modification 1]

Hereinafter, Modification 1 of the second embodiment will be described. Differences from the second embodiment will be mainly described below.

In the second embodiment, the case where the review of the supply and demand adjustment plan during the suppression period is performed once is exemplified. On the other hand, in Modification 1, the case where the review of the supply and demand adjustment plan during the suppression period is performed twice or more times is exemplified.

### (Management Method)

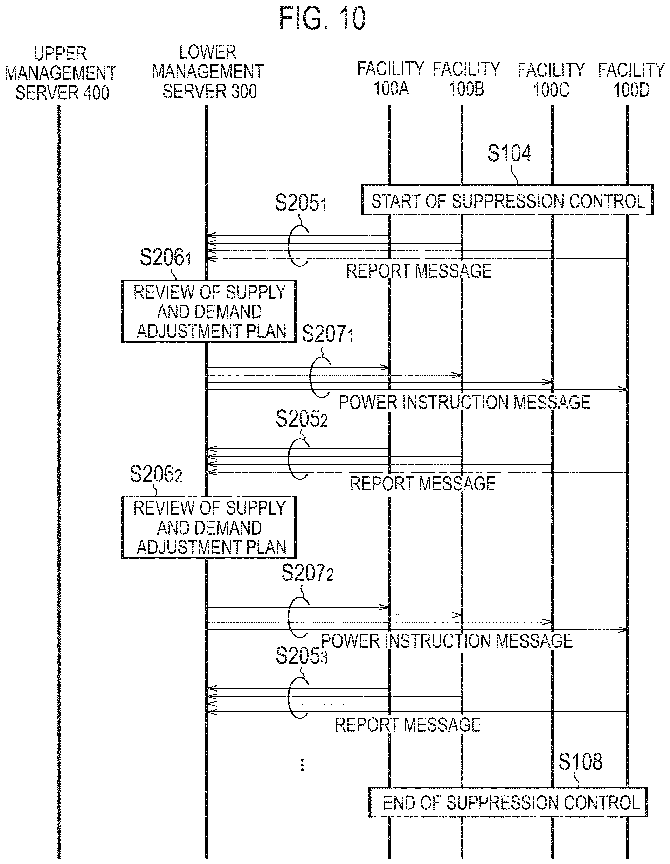

Hereinafter, a management method according to Modification 1 will be described. Fig. 10 is a diagram illustrating a management method according to Modification 1. In Fig. 10, the management method during the suppression period will be mainly described. Therefore, although the management method before and after the suppression period is omitted, it should be noted that the management method before and after the suppression period is the same as in Fig. 9.

As illustrated in Fig. 10, steps S205 to S207 are set as one step to perform the reception of the report message, the review of the supply and demand adjustment plan, and the transmission of the second power instruction message. Since the processes of steps S205 to S207 are similar to the above-described steps S105 to S107, a detailed description thereof will be omitted.

Here, in Modification 1, a process including steps S205 to S207 (hereinafter, a supply and demand adjustment review process) is performed twice or more times. The supply and demand adjustment review process may be performed at predetermined intervals (for example, 10 minutes).

### [Third Embodiment]

A third embodiment will be described below. Differences from the embodiment will be mainly described below.

Specifically, in the first and second embodiments, the lower management server 300 transmits, to the facility 100, a power instruction message requesting the suppression of the forward power flow amount or the reverse power flow amount. On the other hand, in the third embodiment, the lower management server 300 transmits, to the facility 100, a power instruction message requesting the suppression relaxation of the forward power flow amount or the reverse power flow amount (hereinafter, a suppression relaxation message). That is, in the third embodiment, in a case where the suppression of the forward power flow amount or the reverse power flow amount is excessive, the suppression relaxation message is transmitted.

For example, in the suppression of the forward power flow amount or the reverse power flow amount, a target suppression amount is determined, and it is preferable to control the suppression amount within a predetermined range with reference to the target suppression amount. That is, it is not necessary to suppression the forward power flow amount or the reverse power flow amount to the target suppression amount or less, and it is preferable to avoid the excessive suppression of the forward power flow amount or the reverse power flow amount. From this viewpoint, the suppression relaxation message is transmitted.

Here, the lower management server 300 transmits the suppression relaxation message when the suppression amount is not controlled within the predetermined range based on the target suppression amount. The lower management server 300 determines at least one of the contents of the suppression relaxation message (a relaxation amount or a relaxation rate) and the destination of the suppression relaxation message, based on suppression influence information that influences the suppression of the forward power flow amount or the reverse power flow amount.

First, the lower management server 300 may specify the facility 100 that is less likely to suppression the forward power flow amount or the reverse power flow amount, based on the above-described equipment information, and transmit the suppression relaxation message to the specified facility 100. Furthermore, the lower management server 300 may specify the difficulty to execute the suppression of the forward power flow amount or the reverse power flow amount based on the equipment information, and the contents of the suppression relaxation message (the relaxation amount or the relaxation rate) may be determined based on the difficulty to execute.

Second, the lower management server 300 may specify the facility 100 that is less likely to suppression the forward power flow amount or the reverse power flow amount, based on the above-described facility environment information, and transmit the suppression relaxation message to the specified facility 100. Furthermore, the lower management server 300 may specify the difficulty to execute the suppression of the forward power flow amount or the reverse power flow amount based on the facility environment information, and the contents of the suppression relaxation message (the relaxation amount or the relaxation rate) may be determined based on the difficulty to execute.

Third, the lower management server 300 may specify the facility 100 that is less likely to suppression the forward power flow amount or the reverse power flow amount, based on the above-described suppression time information, and transmit the suppression relaxation message to the specified facility 100. Furthermore, the lower management server 300 may specify the difficulty to execute the suppression of the forward power flow amount or the reverse power flow amount based on the suppression time information, and the contents of the suppression relaxation message (the relaxation amount or the relaxation rate) may be determined based on the difficulty to execute.

Fourth, the lower management server 300 may specify the facility 100 that is less likely to suppression the forward power flow amount or the reverse power flow amount, based on the above-described EMS capability information, and transmit the suppression relaxation message to the specified facility 100. Furthermore, the lower management server 300 may specify the difficulty to execute the suppression of the forward power flow amount or the reverse power flow amount based on the EMS capability information, and the contents of the suppression relaxation message (the relaxation amount or the relaxation rate) may be determined based on the difficulty to execute.

In these cases, the lower management server 300 may determine at least one of the contents of the suppression relaxation message (the relaxation amount or the relaxation rate) and the destination of the suppression relaxation message based on the above-described response message or the inquiry message.

Furthermore, the lower management server 300 may determine at least one of the contents of the suppression relaxation message (the relaxation amount or the relaxation rate) and the destination of the suppression relaxation message based on the following information.

First, the lower management server 300 may specify the facility 100 that is less likely to suppression the forward power flow amount or the reverse power flow amount, based on the suppression result in the past, and transmit the suppression relaxation message to the specified facility 100. The lower management server 300 may specify the difficulty to execute the suppression of the forward power flow amount or the reverse power flow amount based on the suppression result in the past, and the contents of the suppression relaxation message (the relaxation amount or the relaxation rate) may be determined based on the difficulty to execute. The suppression result in the past is an actual result illustrating a level at which the forward power flow amount or the reverse power flow amount has been actually suppressed according to the power instruction message, and it is determined that the suppression of the forward power flow amount or the reverse power flow amount is difficult to execute as the achievement degree of the actual suppression amount is lower with respect to the target suppression amount.

Second, the lower management server 300 may specify the facility 100 that is less likely to suppression the forward power flow amount or the reverse power flow amount, based on the communication result in the past, and transmit the suppression relaxation message to the specified facility 100. The lower management server 300 may specify the difficulty to execute the suppression of the forward power flow amount or the reverse power flow amount based on the communication performance in the past, and the contents of the suppression relaxation message (the relaxation amount or the relaxation rate) may be determined based on the difficulty to execute. In the communication result in the past, it is determined that the suppression of the forward power flow amount or the reverse power flow amount is difficult to execute as the arrival degree of the power instruction message is lower with respect to the facility 100. In such a case, the response time included in the above-described EMS capability information may be used as the communication result.

Furthermore, the lower management server 300 may determine a factor (unachieved factor) for which the suppression of the forward power flow amount or the reverse power flow amount is difficult to execute based on the suppression result in the past. For example, the determination of the factor is performed as follows.
(1) In a case where the phenomenon that the suppression of the forward power flow amount or the reverse power flow amount is difficult to execute in a specific time period is repeated with the same pattern, the lower management server 300 determines that the unachieved factor is an environmental factor of the distributed power source 130. For example, if the distributed power source 130 is a solar cell, the lower management server 300 may determine that the unachieved factor is an insufficient amount of sunshine in a specific time period (for example, the solar cell is in the shadow of the building).
(2) If the suppression of the forward power flow amount or the reverse power flow amount is difficult to execute due to the stop (for example, maintenance or repair) of the distributed power source 130, the lower management server 300 may determine that the unachieved factor is a schedule factor of the power instruction message (for example, insufficient information collection).
(3) If the suppression of the forward power flow amount or the reverse power flow amount is difficult to execute by the facility 100 provided in the specific area, the lower management server 300 may determine that the unachieved factor is a natural factor of the specific area. For example, if the distributed power source 130 is a solar cell, the lower management server 300 determines that the unachieved factor is an insufficient amount of sunlight in a specific area (for example, bad weather).
(4) If the suppression of the forward power flow amount or the reverse power flow amount is difficult to execute by the facility 100 including a distributed power source 130 of a specific model or manufacturer, the lower management server 300 may determine that the unachieved factor is a factor of a specific model or manufacturer.

In this way, it is possible to improve the control accuracy of the forward power flow amount or the reverse power flow amount by the power instruction message by analyzing the unachieved factor and transmitting the power instruction message based on the unachieved factor.

For example, if the suppression period in which the analysis of the unachieved factor is performed is the analysis period, the power instruction message may be transmitted based on the unachieved factor during the suppression period next to the analysis period. In such a case, the power instruction message may be transmitted based on the unachieved factor before the start of the suppression period next to the analysis period, and the power instruction message (for example, the suppression relaxation message) may be transmitted based on the unachieved factor during the suppression period next to the analysis period. Alternatively, the power instruction message (for example, the suppression relaxation message) may be transmitted based on the unachieved factor in the middle of the suppression period in which the unachieved factor has been analyzed.

### [Other Embodiments]

Although the present invention has been described with reference to the above-described embodiments, it should not be understood that the description and drawings constituting a part of this disclosure limit the present invention. From this disclosure, various alternative embodiments, examples, and operational technologies will become apparent to those skilled in the art.

Any two or more of the first embodiment, the second embodiment, and the third embodiment may be combined. For example, the lower management server 300 may transmit the power instruction message to the facility 100 based on the response message before the start of the suppression period of the forward power flow amount or the reverse power flow amount, and may transmit the power instruction message to the facility 100 based on the report message during the suppression period of the forward power flow amount or the reverse power flow amount. The lower management server 300 may transmit the suppression relaxation message as the second power instruction message during the suppression period of the forward power flow amount or the reverse power flow amount.

In the embodiment, the suppression of the forward power flow amount or the reverse power flow amount has been mainly described. However, the embodiment is not limited thereto. Specifically, the embodiment can also be applied to a system that uses the distributed power source provided in the facility 100 as a virtual power plant (VPP). In such a case, the forward power flow suppression message or the reverse power flow suppression message may be read as a power source message requesting the control of the distributed power source installed in the facility 100. In addition, the term "suppression" may be read as "control". That is, the embodiment can also be applied to the case of increasing the forward power flow amount or the reverse power flow amount. In addition, when the distributed power source is operated and controlled as VPP, the operation instructed to the distributed power source may be transmitted as the suppression result.

As described above, the suppression influence information may be managed by the manager 320. The suppression influence information may be registered in advance in the manager 320, or may be received from the facility 100. If the suppression influence information is registered in advance in the manager 320, for example, when a contract is made between an aggregator such as a power distribution company and the user of the facility 100, the suppression influence information is registered in the manager 320. If the suppression influence information is transmitted from the facility 100, the transmission of the suppression influence information may be performed in a method that complies with the Open ADR standard. For example, the transmission of the suppression influence information is realized by a message that complies with the Open ADR standard ("TELEMETRY USAGE", "TELEMETRY STATUS", "HISTORY USAGE", "EiOpt service", or "oadrDistributeEvent").

Furthermore, predetermined information included in the suppression influence information may be registered in advance in the manager 320, and information other than the predetermined information included in the suppression influence information may be received from the facility 100. The predetermined information registered in advance in the manager 320 may be static information that does not change for each time period, such as configuration information of the load, configuration information of the distributed power source, the management state of the facility 100, and EMS capability information. The information received from the facility 100 may be dynamic information that changes for each time period, such as state information of the load, state information of the distributed power source, the temperature of the facility 100, and suppression time information.

The entire contents of Japanese Patent Application No. 2015-168904 (filed on August 28, 2015) and Japanese Patent Application No. 2015-168905 (filed on August 28, 2015) are incorporated herein by reference.

## Claims

1. A management server comprising:
a transmitter configured to transmit a power instruction message; and
a receiver configured to receive, from a facility, a response message or a report message with respect to an inquiry message,
wherein the transmitter is further configured to transmit the power instruction message based on the response message or the report message,
the inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount, and
the report message comprises information indicating a control situation of the forward power flow amount or the reverse power flow amount during a control period of the forward power flow amount or the reverse power flow amount.

2. The management server according to claim 1, wherein
the power instruction message comprises one of a power source message requesting a suppression of a distributed power source installed in the facility, a forward power flow suppression message requesting the suppression of the forward power flow amount, and a reverse power flow suppression message requesting the suppression of the reverse power flow amount.

3. The management server according to claim 1 or 2, wherein
the inquiry message comprises information inquiring whether the suppression of the forward power flow amount or the reverse power flow amount can be performed, and
the transmitter is configured to transmit the power instruction message to the facility that has returned the response message including information indicating that the suppression of the forward power flow amount or the reverse power flow amount can be performed.

4. The management server according to any one of claims 1 to 3, wherein
the inquiry message comprises information indicating a first suppression amount as a suppression amount of the forward power flow amount or the reverse power flow amount, and
the inquiry message or the power instruction message, which comprises information indicating a second suppression amount smaller than the first suppression amount as the suppression amount of the forward power flow amount or the reverse power flow amount, is transmitted to the facility that has returned the response message including information indicating that the suppression of the first suppression amount cannot be performed.

5. The management server according to any one of claims 1 to 4, wherein
the inquiry message comprises information indicating a first suppression amount as a suppression amount of the forward power flow amount or the reverse power flow amount, and
the inquiry message or the power instruction message, which comprises information indicating a fourth suppression amount larger than the first suppression amount as the suppression amount of the forward power flow amount or the reverse power flow amount, is transmitted to the facility that has returned the response message including information indicating that the suppression of the first suppression amount can be performed.

6. The management server according to any one of claims 1 to 5, wherein
the response message or the report message comprises equipment information about an equipment included in the facility, and
the equipment information comprises at least one of configuration information indicating a configuration of the equipment and state information indicating an operating state of the equipment.

7. The management server according to claim 6, wherein
the equipment information comprises one of load information about a load included in the facility and distributed power source information about a distributed power source included in the facility.

8. The management server according to claim 7, wherein
the load information comprises information indicating a type of the load as the configuration information, and/or comprises information indicating one of power consumption of the load and an operating state of the load as the state information.

9. The management server according to claim 7, wherein
the distributed power source information comprises information indicating a type of the distributed power source as the configuration information, and/or comprises information indicating an available output amount of the distributed power source as the state information.

10. The management server according to any one of claims 1 to 9, wherein
the response message or the report message comprises facility environment information about an environment of the facility, and
the facility information comprises at least one of a temperature of the facility and a management state of the facility.

11. The management server according to any one of claims 1 to 10, wherein
the response message comprises suppression time information indicating a time for which the forward power flow amount or the reverse power flow amount can be suppressed in the facility, and
the suppression time information comprises information indicating at least one of:
a timing when the suppression of the forward power flow amount or the reverse power flow amount can be started in the facility,
a time length during which the suppression of the forward power flow amount or the reverse power flow amount can be continued in the facility, a time period in which the forward power flow amount or the reverse power flow amount can be suppressed in the facility, and
the number of suppressions of the forward power flow amount or the reverse power flow amount, which the facility handles.

12. The management server according to any one of claims 1 to 11, wherein
the response message or the report message comprises capability information about a capability of a control apparatus configured to control an equipment included in the facility, and
the capability information comprises information indicating at least one of:
a unit time length during which the control apparatus can control the equipment and
a response time from the receipt of the power instruction message to a timing at which the suppression of the forward power flow amount or the reverse power flow amount can be started.

13. The management server according to any one of claims 1 to 12, wherein
the transmitter is configured to transmit a first power instruction message as the power instruction message before the control period, and
the transmitter is configured to transmit a second power instruction message as the power instruction message during the control period based on the report message.

14. The management server according to any one of claims 1 to 13, wherein
the report message comprises an actual result value of the suppression amount of the forward power flow amount or the reverse power flow amount.

15. The management server according to any one of claims 1 to 14, wherein
the first power instruction message comprises a suppression request amount of the forward power flow amount or the reverse power flow amount, and
the report message comprises information indicating whether an actual result value of the suppression amount of the forward power flow amount or the reverse power flow amount corresponds to the suppression request amount.

16. A management method comprising:
a step A of transmitting a power instruction message; and
a step B of receiving, from a facility, a response message or a report message with respect to an inquiry message,
wherein the step A comprises transmitting the power instruction message based on the response message or the report message,
the inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount, and
the report message comprises information indicating a control situation of the forward power flow amount or the reverse power flow amount during a control period of the forward power flow amount or the reverse power flow amount.

17. A management system comprising:
a transmitter configured to transmit a power instruction message; and
a receiver configured to receive, from a facility, a response message or a report message with respect to an inquiry message,
wherein the transmitter is configured to transmit the power instruction message based on the response message or the report message,
the inquiry message comprises at least one of information inquiring whether a suppression of a forward power flow amount from a power grid to a facility or a reverse power flow amount from the facility to the power grid can be performed, and information indicating a suppression amount of the forward power flow amount or the reverse power flow amount, and
the report message comprises information indicating a control situation of the forward power flow amount or the reverse power flow amount during a control period of the forward power flow amount or the reverse power flow amount.
